# EUROPEAN PATENT SPECIFICATION

(11) **EP 0 450 845 B1**
(45) Date of publication and mention of the grant of the patent: **01.03.1995**
(21) Application number: 91302666.2
(22) Date of filing: 27.03.1991
(51) Int. Cl.: F16N 21/02, F16D 3/40

(54) **Multi-headed lubrication fitting**
Mehrköpfiger Schmiernippel
Raccord de graisseur à plusieurs têtes

(30) Priority: 05.04.1990 US 505345
(43) Date of publication of application: 09.10.1991
(73) Proprietor: DANA CORPORATION, Toledo, OH 43615 (US)
(72) Inventor: Valencic, Leon, Oregon, Ohio 43616 (US)
(74) Representative: Cheyne, John Robert Alexander Mackenzie

(56) References cited:
- DE-A- 2 055 066
- GB-A- 742 693
- US-A- 1 673 399
- US-A- 2 040 002
- US-A- 2 215 339
- US-A- 3 375 901
- US-A- 4 874 349

## Description

### BACKGROUND OF THE INVENTION

This invention relates in general to lubrication fittings adapted to be mounted on various machinery and in particular to a multi-headed lubrication fitting adapted for use with a cross member of a universal joint.

Universal joints are structures which are well known in the art. Such joints usually include a cross member having a central body portion with four trunnions extending outwardly therefrom. The trunnions extend at right angles relative to one another and lie in a single plane. A hollow cylindrical bearing cup, closed at one end, is disposed over the end of each of the trunnions. Roller bearings are provided between each of the bearing cups and its associated trunnion such that the bearing cups are rotatably mounted thereon.

Lubricant can be injected into the cross member through a fitting secured in an aperture formed through the body portion. The aperture communicates with respective passageways formed through each of the trunnions. Such injection, commonly referred to as purging, forces the lubricant outwardly from the body portion through the trunnions toward the closed ends of the bearing cups. The lubricant passes around the outer ends of the trunnions adjacent the closed ends of the bearing cups and radially inwardly back between the bearing cups and the trunnions where the roller bearings are disposed. In this manner, the roller bearings are lubricated for use.

The lubrication fitting is preferably located on the body portion of the cross member so that it is easily accessible, since periodic re-lubrication of the joint is usually required. In some universal joints, the lubrication fitting is located between adjacent trunnions of the cross member, extending outwardly from the body portion. In other universal joints, the lubrication fitting is located in the centre of the body portion, extending co-axially or at an angle relative to the rotational axis of the cross member. However, in both types of joints, the lubrication fitting is relatively accessible only when the universal joint is properly oriented.

US 4874349 discloses a cross member for a universal joint in which a lubrication fitting is located on the body portion of the cross member. The fitting communicates with internal passageways formed within each of the trunnions to enable re-lubrication of the joint.

However, universal joints of the type described above are frequently used in vehicle drive train systems, generally on the ends of rotatable drive shafts. Thus, depending upon the rotational position of the drive shaft when the vehicle is brought in for maintenance, the lubrication fitting may be oriented in a position which is inaccessible or which is accessible only with great difficulty, from beneath the vehicle. It is time consuming and cumbersome to move a vehicle or rotate the drive shaft so that the lubrication fitting is in a more convenient position.

According to the present invention there is provided a multi-headed lubrication fitting comprising:
a body having an internal chamber and a plurality of passageways extending outwardly from said chamber; and
a grease fitting disposed in each of said passageways, each of said grease fittings including a housing secured to said body within said passageway, a passageway formed through said housing so as to communicate with said internal chamber, and check valve means disposed in said housing passageway for permitting the flow of lubricant through said grease fitting into said chamber, but preventing the flow of lubricant in the reverse direction.

The present invention therefore provides a lubrication fitting which is easily accessible from any rotational position.

Preferred embodiments of the invention may have two or four passageways extending outwardly from the internal chamber of the body of the fitting. Preferably, the passageways are oriented so as to be equidistantly spaced from each other.

The check means preferably comprises a spring loaded ball. Since the grease fittings are oriented in a plurality of different directions from one another, at least one of the grease fittings will always be oriented in a convenient position.

The present invention also provides a cross member for a universal joint comprising:
a central body portion having a plurality of trunnions extending outwardly therefrom, internal passageways formed within each of said trunnions, and an aperture formed therein extending into communication with said internal passageways; and
a multi-headed lubrication fitting connected in said central body portion aperture, said fitting including a body having an internal chamber communicating with said internal passageways formed in said central body portion and including a plurality of passageways extending outwardly from said chamber; and a grease fitting disposed in each of said passageways, each of said grease fittings including a housing secured to said body within said passageway, a passageway formed through said housing so as to communicate with said internal chamber, and check valve means disposed in said housing passageway for permitting the flow of lubricant through said grease fitting into the said chamber, but preventing the flow of lubricant in the reverse direction.

For a better understanding of the present invention and to show how it may be carried into effect, reference will now be made, by way of example, to the accompanying drawings.

### BRIEF DESCRIPTION OF THE DRAWINGS

Fig. 1 is a sectional elevational view of a two-headed lubrication fitting in accordance with this invention.

Fig. 2 is a plan view of a universal joint cross member having a four-headed lubrication fitting mounted thereon.

### DETAILED DESCRIPTION OF THE PREFERRED EMBODIMENT

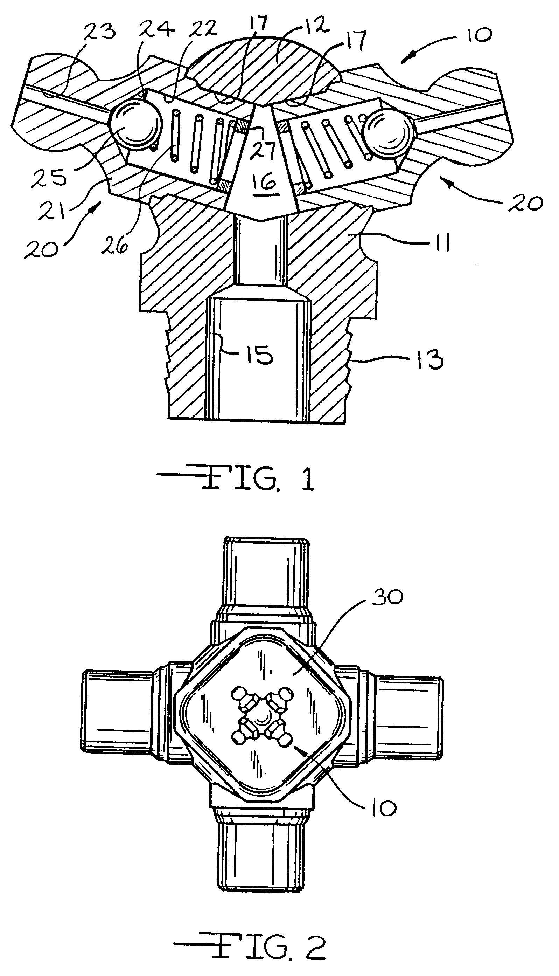

Referring now to the drawings, there is illustrated in Fig. 1 a multi-headed lubrication fitting, indicated generally at 10, in accordance with this invention. The lubrication fitting 10 includes a valve body 11 having a semi-spherical head portion 12 and a threaded end portion 13. A co-axial passageway 15 is formed through the valve body 11. The passageway 15 extends from the threaded end portion 13 to an internal chamber 16 located within the head portion 12. A pair of angled passageways 17 extend outwardly from the chamber 16 to the surface of the head portion 12. Although only two passageways 17 are shown, it will be appreciated that three or more of such passageways may be formed in the head portion 12, as will be explained below. Regardless of how many of these passageways 17 are provided, they are preferably spaced equidistantly from one another.

A grease fitting, indicated generally at 20, is provided for each of the angled passageways 17. Each grease fitting 20 includes a housing 21 having an end which is press fit into the associated passageway 17 or otherwise secured to the head portion 12. A relatively large diameter passageway 22 is formed in that end of the grease fitting 20 which is disposed within the angled passageway 17, while a relatively small diameter passageway 23 is formed in the opposite end thereof. The passageways 22 and 23 are co-axial and extend completely through the grease fitting 20 into the internal chamber 16. A tapered shoulder 24 is defined at the junction between the relatively large diameter passageway 22 and the relatively small diameter passageway 23.

A ball 25 is disposed within the each of the relatively large diameter passageways 22. The ball 25 is urged into contact with the tapered shoulder 24 by one end of a spring 26. The other end of the spring 26 is maintained within the grease fitting 20 by a retaining ring 27, which is press fit or otherwise secured within the relatively large diameter passageway 22. The urging of the ball 25 against the tapered shoulder 24 causes the grease fitting 20 to function as a check valve, thereby permitting the flow of lubricant from the relatively small diameter passageway 23 through the relatively large diameter passageway 22 and into the chamber 16, but preventing the flow of lubricant in the reverse direction.

The lubrication fitting 10 can be installed in a cross member 30 of a universal joint, as shown in Fig. 2. As shown therein, the lubrication fitting 10 may be provided with four grease fittings 20 in the manner described above. The cross member 30 is conventional in the art and includes a plurality of internal passageways (not shown) for transmitting lubricant from the lubrication fitting 10 to the bearings.

Since the grease fittings 20 are oriented in a plurality of different directions from one another, it can be seen that at least one of such grease fittings 20 will always be oriented in a convenient position. This position is usually downwardly when the lubrication fitting 10 is used on the cross member 30, because access thereto is usually accomplished from beneath the vehicle. In any event, a conventional lubrication tool can quickly and easily be attached to one of the grease fittings 20 for use.

## Claims

1. A multi-headed lubrication fitting (10) comprising:
a body (11) having an internal chamber (16) and a plurality of passageways (17) extending outwardly from said chamber (16); and
a grease fitting (20) disposed in each of said passageways (17), each of said grease fittings (20) including a housing (21) secured to said body (11) within said passageway (17), a passageway (22, 23) formed through said housing (21) so as to communicate with said internal chamber (16), and check valve means (25, 26, 27) disposed in said housing passageway (22, 23) for permitting the flow of lubricant through said grease fitting into said chamber (16), but preventing the flow of lubricant in the reverse direction.

2. A multi-headed lubrication fitting as claimed in claim 1 wherein two of said passageways (17) extend outwardly from said chamber (16).

3. A multi-headed lubrication fitting as claimed in claim 1 wherein four of said passageways (17) extend outwardly from said chamber (16).

4. A multi-headed lubrication fitting as claimed in claim 1 wherein said passageways (17) are oriented so as to be equidistantly spaced from one another.

5. A cross member (30) for a universal joint comprising:
a central body portion having a plurality of trunnions extending outwardly therefrom, internal passageways formed within each of said trunnions, and an aperture formed therein extending into communication with said internal passageways; and
a multi-headed lubrication fitting connected in said central body portion aperture, said fitting including a body (11) having an internal chamber (16) communicating with said internal passageways formed in said central body portion and including a plurality of passageways (17) extending outwardly from said chamber (16); and a grease fitting (20) disposed in each of said passageways (17), each of said grease fittings (20) including a housing (21) secured to said body (11) within said passageway (17), a passageway (22, 23) formed through said housing (21) so as to communicate with said internal chamber (16), and check valve means (25, 26, 27) disposed in said housing passageway (22, 23) for permitting the flow of lubricant through said grease fitting (20) into the said chamber (16), but preventing the flow of lubricant in the reverse direction.

6. A cross member as claimed in claim 5 wherein two of said passageways (17) extend outwardly from said chamber (16).

7. A cross member as claimed in claim 5 wherein four of said passageways (17) extend outwardly from said chamber (16).

8. A cross member as claimed in claim 5 wherein said passageways (17) are oriented so as to be equidistantly spaced from one another.

## Patentansprüche

1. Mehrköpfiger Schmiernippel (10), **gekennzeichnet durch** einen Körper (11) mit einer inneren Kammer (16) und einer Mehrzahl von Kanälen (17), die sich von der Kammer (16) aus nach auswärts erstrecken; einen Schmier-Fitting (20), der in jedem Kanal (17) angeordnet ist, und jeder Schmier-Fitting (20) ein Gehäuse (21) aufweist, das am Körper (11) in dem Kanal (17) befestigt ist, ferner durch einen Kanal (22,23), der durch das Gehäuse (21) ausgebildet ist, so daß er in Verbindung mit der inneren Kammer (16) steht, Rückschlagventilen (25, 26, 27), die in dem Gehäuse-Kanal (22, 23) angeordnet sind, um einen Fluß des Schmiermittels durch den Schmier-Fitting in die Kammer (16) zu ermöglichen, jedoch einen Schmiermittelfluß in umgekehrter Richtung zu verhindern.

2. Mehrköpfiger Schmiernippel nach Anspruch 1, **dadurch gekennzeichnet**, daß zwei Kanäle (17) sich von der Kammer (16) aus nach außen erstrecken.

3. Mehrköpfiger Schmiernippel nach Anspruch 1, **dadurch gekennzeichnet**, daß vier Kanäle (17) sich von der Kammer (16) aus nach außen erstrecken.

4. Mehrköpfiger Schmiernippel nach Anspruch 1, **dadurch** **gekennzeichnet**, daß die Kanäle (17) in gleichen Abständen voneinander angeordnet sind.

5. Kreuzstück (30) für ein Universalgelenk, **gekennzeichnet durch** einen zentralen Körper mit einer Mehrzahl von Lagerzapfen, die sich von jenem aus nach außen erstrecken, inneren Kanälen in jedem der Lagerzapfen und einer darin ausgebildeten Öffnung, die sich in Verbindung mit den inneren Kanälen erstreckt;
einen mehrköpfigen Schmiernippel, der in der zentralen Körperöffnung angeordnet ist, und der einen Körper (11) aufweist mit einer inneren Kammer (16), die in Verbindung mit den inneren Kanälen steht, welche in dem zentralen Körperteil ausgebildet sind und der eine Mehrzahl von Kanälen (17) aufweist, die sich von der Kammer (16) aus nach außen erstrecken; ferner durch einen Schmier-Fitting (20), der in jedem Kanal (17) angeordnet ist, und jeder Fitting (20) ein Gehäuse (20) aufweist, das am Körper (11) im Kanal (17) angebracht ist, einen Kanal (22, 23), der durch das Gehäuse (21) so ausgebildet ist, daß er in Verbindung mit der inneren Kammer (16) steht sowie durch Rückschlagventile (25, 26, 27), die im Gehäuse-Kanal (22, 23) liegen, um einen Schmiermittelfluß durch den Schmier-Fitting (20) in die Kammer (16) zu ermöglichen, jedoch einen Schmiermittelfluß in umgekehrter Richtung zu verhindern.

6. Kreuzstück nach Anspruch 5, **dadurch gekennzeichnet**, daß zwei Kanäle (17) sich von der Kammer (16) aus nach außen erstrecken.

7. Kreuzstück nach Anspruch 5, **dadurch gekennzeichnet**, daß vier Kanäle (17) sich von der Kammer (16) aus nach außen erstrecken.

8. Kreuzstück nach Anspruch 5, **dadurch gekennzeichnet**, daß die Kanäle (17) so ausgerichtet sind, daß sie gleiche Abstände voneinander haben.

## Revendications

1. Raccord de lubrification à plusieurs têtes (10) comprenant :
un corps (11) possédant une chambre interne (16) et une pluralité de passages (17) s'étendant vers l'extérieur depuis ladite chambre (16); et
un raccord de graisseur (20) disposé dans chacun desdits passages (17), chacun desdits raccords de graisseur (20) incluant un boîtier (21) fixé audit corps (11) à l'intérieur dudit passage (17), un passage (22, 23) formé à travers ledit boîtier (21) de façon à communiquer avec ladite chambre interne (16), et un moyen formant clapet de retenue (25, 26, 27) disposé dans ledit passage de boîtier (22, 23) pour permettre l'écoulement du lubrifiant à travers ledit raccord de graisseur dans ladite chambre (16) mais pour empêcher l'écoulement du lubrifiant dans la direction inverse.

2. Raccord de lubrification à plusieurs têtes selon la revendication 1, dans lequel deux desdits passages (17) s'étendent vers l'extérieur depuis ladite chambre (16).

3. Raccord de lubrification à plusieurs têtes selon la revendication 1, dans lequel quatre desdits passages (17) s'étendent vers l'extérieur depuis ladite chambre (16).

4. Raccord de lubrification à plusieurs têtes selon la revendication 1, dans lequel lesdits passages (17) sont orientés de façon à être espacés d'une distance égale les uns des autres.

5. Croisillon (30) pour un joint universel comprenant:
une portion de corps central possédant une pluralité de tourillons s'étendant vers l'extérieur depuis celle-ci, des passages internes formés à l'intérieur de chacun desdits tourillons et une ouverture formée à l'intérieur s'étendant en communication avec lesdits passages internes; et
un raccord de lubrification à plusieurs têtes connecté à ladite ouverture de portion de corps central, ledit raccord incluant un corps (11) possédant une chambre interne (16) communiquant avec lesdits passages internes pratiqués dans ladite portion de corps central et incluant une pluralité de passages (17) s'étendant vers l'extérieur depuis ladite chambre (16); et un raccord de graisseur (20) disposé dans chacun desdits passages (17), chacun desdits raccords de graisseur (20) incluant un boîtier (21) fixé audit corps (11) à l'intérieur dudit passage (17), un passage (22, 23) ménagé à travers ledit boîtier (21) de façon à communiquer avec ladite chambre interne (16), et un moyen formant clapet de retenue (25, 26, 27) disposé dans ledit passage de boîtier (22, 23) pour permettre l'écoulement du lubrifiant à travers ledit raccord de graisseur (20) dans ladite chambre (16) mais pour empêcher l'écoulement du lubrifiant dans la direction inverse.

6. Croisillon selon la revendication 5, dans lequel deux desdits passages (17) s'étendent vers l'extérieur depuis ladite chambre (16).

7. Croisillon selon la revendication 5, dans lequel quatre desdits passages (17) s'étendent vers l'extérieur depuis ladite chambre (16).

8. Croisillon selon la revendication 5, dans lequel lesdits passages (17) sont orientés de façon à être espacés d'une distance égale les uns des autres.
